# NEUE EUROPÄISCHE PATENTSCHRIFT

(11) **EP 3 194 229 B2**
(45) Veröffentlichungstag und Bekanntmachung des Hinweises auf die Entscheidung über den Einspruch: **14.01.2026**
(45) Hinweis auf die Patenterteilung: 14.10.2020
(21) Anmeldenummer: 15757215.7
(22) Anmeldetag: 27.08.2015
(51) Int. Cl.: B60T 17/22, G01M 17/08, B61L 3/12

(54) **VERFAHREN ZUR ÜBERWACHUNG UND DIAGNOSE VON KOMPONENTEN EINES SCHIENENFAHRZEUGS, MIT ERWEITERBARER AUSWERTUNGSSOFTWARE**
METHOD FOR MONITORING AND DIAGNOSING COMPONENTS OF A RAIL VEHICLE BY MEANS OF AN EXTENSIBLE EVALUATION SOFTWARE
PROCÉDÉ DE SURVEILLANCE ET DE DIAGNOSTIC DE COMPOSANTS D'UN VÉHICULE FERROVIAIRE AVEC UN LOGICIEL D'EVALUATION EXTENSIBLE

(30) Priorität: 17.09.2014 DE 102014113371
(43) Veröffentlichungstag der Anmeldung: 26.07.2017
(73) Patentinhaber: KNORR-BREMSE Systeme für Schienenfahrzeuge GmbH, 80809 München (DE)
(72) Erfinder: NOCK, Marco, 85622 Feldkirchen (DE); BEHMANN, Benjamin, 81541 München (DE); MOSER, Martin, 80538 München (DE); HÄBEL, Markus, 66540 Neunkirchen (DE)
(74) Vertreter: Maiwald GmbH
(86) Internationale Anmeldenummer: PCT/EP2015/069579
(87) Internationale Veröffentlichungsnummer: WO 2016/041756

(56) Entgegenhaltungen:
- EP-A1- 1 900 597
- EP-A1- 2 251 835
- EP-A1- 2 704 369
- EP-A2- 2 590 277
- WO-A1-01/23238
- WO-A1-01/84105
- WO-A1-2004/024531
- WO-A1-2005/002939
- WO-A1-2008/141775
- WO-A1-2012/021905
- WO-A1-2013/114543
- WO-A2-03/077205
- WO-A2-2004/014699
- WO-A2-2004/092857
- WO-A2-2006/055289
- CN-A- 101 654 112
- CN-A- 102 139 700
- DE-A1- 10 220 812
- DE-A1- 10 233 845
- DE-A1- 102004 008 869
- DE-A1- 102007 006 614
- DE-A1- 102013 201 494
- DE-A1- 19 853 000
- DE-A1- 4 307 897
- DE-U1- 20 117 397
- GB-A- 2 378 248
- US-A- 5 201 834
- US-A- 5 442 553
- US-A- 6 061 809
- US-A1- 2005 060 070
- US-A1- 2009 254 240
- US-A1- 2013 342 362

## Beschreibung

Die Erfindung geht aus von einem Verfahren zur Überwachung und Diagnose von Komponenten eines Schienenfahrzeugs als singuläres Schienenfahrzeug oder als Bestandteil eines aus mehreren Schienenfahrzeugen bestehenden Schienenfahrzeugzuges hinsichtlich einer bedarfsweise erforderlichen Instandsetzung oder Instandhaltung wenigstens einer seiner Komponenten, gemäß dem Oberbegriff von Anspruch 1. Die Erfindung betrifft auch ein System zur Überwachung und Diagnose von Komponenten eines Schienenfahrzeugs als singuläres Schienenfahrzeug oder als Bestandteil eines aus mehreren Schienenfahrzeugen bestehenden Schienenfahrzeugzuges hinsichtlich einer bedarfsweise erforderlichen Instandsetzung oder Instandhaltung wenigstens einer seiner Komponenten gemäß Anspruch 16.

Eine solches Verfahren bzw. ein solches System sind beispielsweise aus DE 102 33 845 B4 oder aus DE 10 2013 201 494 A1 bekannt. WO 01/23238 A1 offenbart ein Verfahren zum Übertragen von Files zwischen einem bordfesten Computer eines Schienenfahrzeugs und einer entfernt angeordneten Basis, wobei für den Fall, dass Updates zu dem Schienenfahrzeug übertragen werden sollen, diese Updates zu dem Computer übertragen werden. US 2013/0342362 A1 offenbart ein System zur Überwachung des Betriebs eines Schienenfahrzeugs, welches mit mehreren Sensoreinrichtungen und einer Kommunikationseinheit versehen ist, welche von den Sensoreinrichtungen erfasste Daten an eine Basisstation drahtlos überträgt.

Der vorliegenden Erfindung liegt daher die Aufgabe zugrunde, ein Verfahren sowie ein System der eingangs erwähnten Art derart fortzubilden, dass es flexibler anwendbar ist. Weiterhin soll auch ein entsprechendes System zur Verfügung gestellt werden. Diese Aufgabe wird erfindungsgemäß durch die Merkmale von Anspruch 1 bzw. Anspruch 16 gelöst.

Erfindungsgemäß ist die Auswertungssoftware modular aufgebaut, wobei bedarfsweise einzelne Softwaremodule ergänzt, gelöscht oder ausgetauscht werden. Weiterhin erfindungsgemäß ist vorgesehen, dass ein solches Softwaremodul je einer, im Hinblick auf eine Instandsetzung oder Instandhaltung zu überwachenden oder diagnostizierenden Komponente zugeordnet ist. Mit anderen Worten bildet die Struktur der Modularität der Auswertungssoftware die Struktur der zu überwachenden oder zu diagnostizierenden Komponenten des Schienenfahrzeugs oder des Schienenfahrzeugzuges ab. Dann ist jedes Softwaremodul an die jeweils zugeordnete Komponente angepasst. Weiterhin erfindungsgemäß ist vorgesehen, dass die in der Auswerteinrichtung implementierte Auswertungssoftware mittels vom Kontrollzentrum an die Auswerteeinrichtung gesandter Softwaremodule ergänzt, erweitert, verändert oder angepasst wird. Die Auswerteeinrichtung und das Kontrollzentrum sind dazu ausgebildet, dass dies möglich ist, nämlich dadurch, dass die Struktur der Auswertungssoftware modular ist, so dass diese jederzeit durch neue Softwaremodule oder durch Austausch oder Löschen von Softwaremodulen ergänzt oder verändert werden kann.

Dies findet während des bestimmungsgemäßen Einsatzes oder Fahrbetriebs des Schienenfahrzeugs oder Schienenfahrzeugzuges statt, d.h. das Schienenfahrzeug oder der Schienenfahrzeugzug befindet sich auf der zu befahrenden Strecke, alternativ aber auch im Depot.

Unter einem Kontrollzentrum soll dabei nicht nur ein stationäres Kontrollzentrum verstanden werden, welches beispielsweise in Form einer Datenverarbeitungseinrichtung in einem Büro untergebracht ist. Von diesem Begriff ist vielmehr auch ein mobiles oder portables Kontrollzentrum umfasst, das beispielsweise an das Schienenfahrzeug oder den Schienenfahrzeugzug herangeführt und zur kabelgebundenen Datenübertragung an hierfür vorgesehene Schnittstellen angeschlossen oder zur drahtlosen Datenübertragung in eine hierfür geeignete Entfernung gebracht wird. Die Ergänzung, Erweiterung, Veränderung oder Anpassung der in der Auswerteinrichtung implementierten Auswertungssoftware erfolgt dabei bedarfsweise, d.h. wenn sie notwendig ist oder vom Personal im Kontrollzentrum für notwendig erachtet wird.

Die Vorteile dieser Maßnahmen liegen darin, dass die Auswertealgorithmen bzw. die Auswertungssoftware während des laufenden Betriebs des Schienenfahrzeugs bzw. des Schienenfahrzeugzuges an Bord ergänzt, verändert oder angepasst werden kann, ohne dass hierzu der Betrieb oder Einsatz unterbrochen werden müsste. Diese Ergänzung, Veränderung oder Anpassung der Auswertungssoftware erfolgt rückwirkungsfrei, wobei der bestimmungsgemäße Betriebs oder die Betriebssicherheit des Schienenfahrzeugs oder Schienenfahrzeugzuges nicht beeinträchtigt wird. Darüber hinaus ist sichergestellt, dass das Verfahren kostengünstig und einfach (Zugänglichkeit) verändert bzw. zusätzliche Funktionen schienenfahrzeugseitig ergänzt werden können (modular und skalierbar), ohne den Betrieb oder sicherheitsrelevante Funktionen zu beeinflussen.

Durch die genannten Maßnahmen wird eine sog. Condition Based Maintenance (CBM) realisiert, bei welcher Instandhaltungsprognosen basierend auf den vorhandenen Betriebsdaten des Schienenfahrzeugs/Schienenfahrzeugzugs und optional auch Umgebungsdaten (z.B. Umgebungstemperatur, Luftfeuchtigkeit, Streckendaten) automatisch ermittelt und dem Betreiber bzw. dem Instandhalter zur Verfügung gestellt werden. Ein solches System schafft die technischen Voraussetzungen, eine zustandsbasierte Instandhaltung zu ermöglichen. Dies macht eine Vernetzung der einzelnen Systeme auf dem Schienenfahrzeug (Subsysteme, Komponenten, Fahrzeugleittechnik) erforderlich sowie eine kontinuierliche, dynamische Anpassung der Methoden zur Ermittlung von Abnutzungsvorräten und dem daraus abgeleiteten Instandhaltungsbedarf, was durch die Erfindung verwirklicht wird. Ein solches CBM-System liefert für die operative Instandhaltung Informationen in Form der Meldung(en), die Empfehlungen zum optimalen Instandhaltungszeitpunkt gibt.

Ein solches CBM-System beinhaltet wenigstens eine Auswerteeinrichtung auf dem Schienenfahrzeug/Schienenfahrzeugzug (onboard unit) und ein Kontrollzentrum (Backoffice) auf der Wegstrecke, wobei Instandhaltungsprognosen basierend auf den jeweils vorliegenden Betriebs-und Umweltdaten in Form der von der Auswerteeinrichtung an das Kontrollzentrum gesandten Meldungen automatisch erzeugt werden. Hierzu beinhaltet die Auswertungssoftware oder CBM-Logik eine entsprechende Entscheidungslogik zur Empfehlung optimaler Instandhaltungszeitpunkte. Die in die Auswerteinrichtung integrierte CBM-Logik liefert daher aus einer Kombination von wirtschaftlichen und technischen Parametern Ergebnisse hinsichtlich eines optimalen Zeitpunkts zur Durchführung von Instandhaltungsmaßnahmen.

Basierend auf den physikalischen Messgrößen wird mittels der Auswertungssoftware der Abnutzungsvorrat der betreffenden Komponente oder des betreffenden Subsystems des Schienenfahrzeugs/Schienenfahrzeugzugs bestimmt und daraus der Instandhaltungsbedarf der betreffenden Komponente oder des betreffenden Subsystems ermittelt. Die an das Kontrollzentrum übermittelte Meldung (CBM-Nachricht) beinhaltet beispielsweise eine Information darüber, bis wann eine Instandhaltung eingeplant werden sollte.

Eine onboard unit, mit welcher die verschiedenen, den jeweiligen Komponenten zugeordneten Auswerteeinrichtungen (intelligente Subsysteme) kommunizieren, bildet dann beispielsweise eine Schnittstelle zwischen den Auswerteeinrichtungen und dem weg- oder streckenseitigen Kontrollzentrum.

Um eine Erweiterbarkeit der Softwarearchitektur zur Integration weiterer Funktionen auch während des Betriebs eines Schienenfahrzeugs/Schienenfahrzeugzugs zu ermöglichen, werden mittels Datenfernübertragung aus dem Kontrollzentrum (Backoffice) Softwaremodule dynamisch auf die onboard unit gespielt.

Durch die in den Unteransprüchen aufgeführten Maßnahmen sind vorteilhafte Weiterbildungen und Verbesserungen der in Anspruch 1 angegebenen Erfindung möglich.

Erfindungsgemäß ist die Auswertungssoftware modular aufgebaut, wobei bedarfsweise einzelne Softwaremodule ergänzt, gelöscht oder ausgetauscht werden.

Gemäß der Erfindung ist ein Softwaremodul je einer, im Hinblick auf eine In-standsetzung oder Instandhaltung zu überwachende oder diagnostizierende Komponente zugeordnet. Mit anderen Worten bildet die Struktur der Modularität der Auswertungssoftware bevorzugt die Struktur der zu überwachenden oder zu diagnostizierenden Komponenten des Schienenfahrzeugs oder des Schienenfahrzeugzuges ab. Dann ist jedes Softwaremodul an die jeweils zugeordnete Komponente angepasst.

Besonders bevorzugt erfolgt die Ergänzung, Veränderung oder Anpassung der in der Auswerteinrichtung implementierten Auswertungssoftware durch drahtlose Kommunikation mit dem Kontrollzentrum. Eine solche drahtlose Kommunikation kann beispielsweise über eine Funkverbindung zwischen einer auf dem Schienenfahrzeug/Schienenfahrzeugzug installierten Sende-/Empfangseinrichtung und einer im Kontrollzentrum installierten Sende-/Empfangseinrichtung erfolgen, aber auch per WLAN im Depot. Alternativ kann dies aber auch mittels einer Wegstreckenverbindung im Gleisbett erfolgen. Die vom Schienenfahrzeug/Schienenfahrzeugzug an das Kontrollzentrum gesandte Meldung nutzt bevorzugt ebenfalls diesen Weg.

Dabei beinhaltet die an das Kontrollzentrum gelieferte Meldung bevorzugt eine Identifikation der betroffenen Komponente.

Weiterhin beinhaltet die Meldung bevorzugt auch eine Information über einen noch vorhandenen Abnutzungsvorrat wenigstens einer von Verschleiß betroffenen Komponente des Schienenfahrzeugs oder des Schienenfahrzeugszuges. Damit kann das Erreichen einer vorgegebenen Verschleißgrenze zeitlich bzw. anhand der Anzahl noch möglicher oder zulässiger Gebrauchszyklen der Betreffenden Komponente prognostiziert werden. Daher beinhaltet die Meldung bevorzugt eine Prognose über die noch verbleibende Zeit bzw. über die Anzahl der noch zu Verfügung stehenden Gebrauchszyklen, bis eine Instandhaltung oder Instandsetzung der betreffenden Komponente notwendig ist.

Gemäß einer Weiterbildung kann die Meldung auch eine Information über die Ursache einer (eines) eventuell aufgetretenen Störung oder Fehlers der Komponente beinhalten. In diesem Fall ist die Auswertungssoftware bzw. die Messeinrichtung dazu ausgebildet und die Messgröße auch geeignet, dass eine solche Information geliefert werden kann.

Bei mehreren zu einem Schienenfahrzeugzug zusammen gefassten Schienenfahrzeugen kann die Meldung auch das von einer erforderlichen Instandhaltung oder Instandsetzung betroffene Schienenfahrzeug identifizieren.

Besonders bevorzugt beinhaltet die Meldung unterschiedliche Dringlichkeitsstufen im Hinblick auf eine erforderliche Instandhaltung oder Instandsetzung der Komponente. Eine solche Dringlichkeitsstufe kann beispielsweise ein zeitlich langfristiges, kurzfristiges oder sofortiges Erfordernis einer Instandhaltungs- oder Instandsetzungsmaßnahme der betreffenden Komponente repräsentieren.

Weiterhin kann die die Meldung auch den momentanen Standort des Schienenfahrzeugs oder des Schienenfahrzeugzuges beinhalten.

Besonders bevorzugt wird die Meldung in dem Kontrollzentrum in visueller Form ausgegeben.

Besonders bevorzugt beinhalten die vom Kontrollzentrum an die Auswerteeinrichtung gesandten Instruktionen, Daten und/oder Softwaremodule auch solche Instruktionen, Daten und/oder Softwaremodule, welche die bestimmungsgemäße Funktion der Komponente betreffen. Mit anderen Worten wird dadurch nicht nur die Auswertungssoftware ergänzt, verändert oder angepasst, sondern auch die Software, durch welche die betreffende Komponente im Hinblick auf ihre bestimmungsgemäße Funktion gesteuert oder geregelt wird.

Erfindungsgemäß wird auf dem Schienenfahrzeug oder auf dem Schienenfahrzeugzug eine bordseitige zentrale Einheit (onboard unit) vorgesehen, welche mit den Auswerteeinrichtungen mehrerer Komponenten kommuniziert und die Meldung(en) an das Kontrollzentrum liefert.

Besonders bevorzugt werden von der Auswerteeinrichtung oder von den Auswerteeinrichtungen weitere Messgrößen ausgewertet, welche nicht in Zusammenhang mit der betreffenden oder zugeordneten Komponente stehen, wobei die weiteren Messgrößen die Umgebung oder befahrene Strecke des Schienenfahrzeugs oder Schienenfahrzeugzuges betreffen.

Die hinsichtlich ihres Instandhaltungs- oder Instandsetzungsbedarfs überachten Komponenten sind bevorzugt wenigstens eine der folgenden Komponenten: Drehgestellausrüstung, Klimaanlage, Luftversorgungssystem, Stromversorgungssystem, Sandungssystem, Türöffnungs- und Schließsystem, Scheibenwischervorrichtung, Reibungsbasiertes Bremssystem, generatorisches Bremssystem (elektrodynamische Bremse), Magnetschienenbremse, Toiletten, Bremsensteuerung, wobei diese Aufzählung aber nicht abschließend ist.

Die Erfindung wird nachstehend anhand von Ausführungen unter Bezugnahme auf die beigefügte Zeichnung näher beschrieben. Es zeigt
- Fig.1: einen schematischen Aufbau eines Systems zur Überwachung und Diagnose von Komponenten eines Schienenfahrzeugs zur Ausführung eines Verfahrens zur Überwachung und Diagnose von Komponenten des Schienenfahrzeugs;
- Fig.2: einen Ausschnitt aus einer weiteren Ausführungsform des Systems;
- Fig.3: eine Draufsicht auf die Ausführungsform von Fig.2;
- Fig.4: eine schematische Tabelle, welche verschiedene Dringlichkeitsstufen einer Meldung darstellt;
- Fig.5: einen Ablaufplan einer bevorzugten Ausführungsform des Verfahrens;
- Fig.6: eine schematische Darstellung einer modularen Struktur der Auswertungssoftware, welche bei dem Verfahren zum Einsatz kommt.

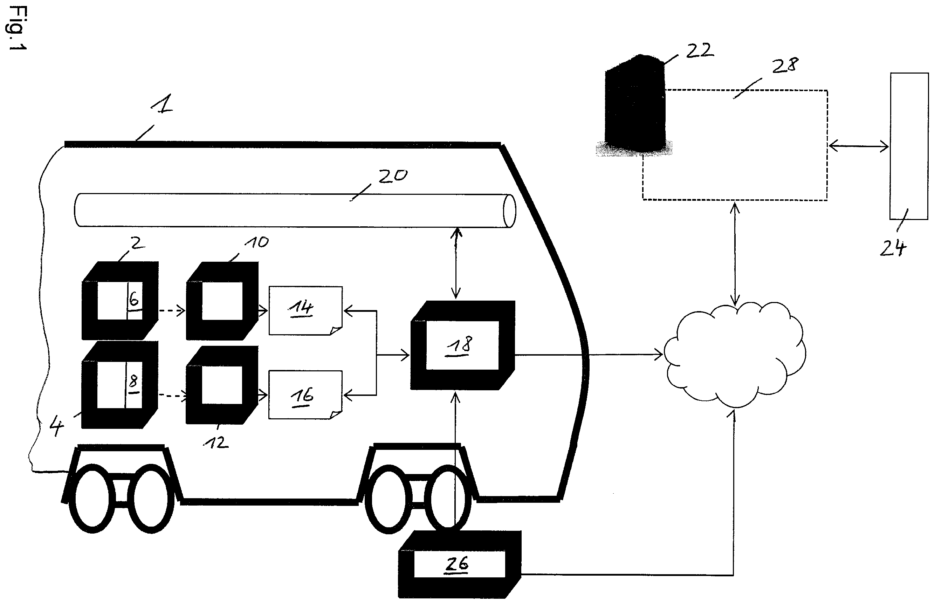

Fig.1 zeigt einen schematischen Aufbau eines Systems zur Überwachung und Diagnose von Komponenten 2, 4 eines Schienenfahrzeugs 1 hinsichtlich einer bedarfsweise erforderlichen Instandsetzung oder Instandhaltung der Komponenten 2, 4 gemäß einer bevorzugten Ausführungsform. Das Schienenfahrzeug 1 ist beispielsweise ein einzelnes Schienenfahrzeug oder ein Schienenfahrzeug eines aus mehreren Schienenfahrzeugen bestehenden Schienenfahrzeugzuges.

Bei dem in Fig.1 dargestellten Schienenfahrzeug 1 werden beispielsweise zwei Komponenten oder Subsysteme 2, 4 hinsichtlich einer bedarfsweise erforderlichen Instandsetzung oder Instandhaltung diagnostiziert bzw. überwacht, beispielsweise eine reibungsbasierte elektro-pneumatische Bremse 1 in einem Drehgestell des Schienenfahrzeugs 1 und eine Sandungseinrichtung 2, 4.

Dabei ist jeweils einer Komponente oder einem Subsystem 2, 4 wenigstens eine Messeinrichtung 6, 8 in Form eines Sensors zugeordnet, welche eine für eine vorausschauende Instandhaltung oder Instandsetzung der betreffenden Komponente 2, 4 relevante Messgröße erfasst. Bei einer reibungsbasierten elektro-pneumatischen Bremse 2 mit Scheibenbremsen als Aktuatoren ist eine solche Messgröße beispielsweise die Temperatur und/oder die Belagdicke der Bremsbeläge oder der Bremsscheibe der Scheibenbremse. Die Belagdicke kann beispielsweise durch in die Bremsbeläge integrierte elektrische Schleifen detektiert werden, die bei Abnutzung der Bremsbeläge bis auf die Belagebene, in denen diese Schleifen angeordnet sind, zerstört werden und dann ein entsprechendes elektrisches Signal erzeugen. Bei der Sandungseinrichtung 2, 4 besteht die Messgröße beispielsweise in einem gemessenen Pegel des Sandkastens oder in einem gemessenen Durchfluss eines Sandrohrs.

An Bord des Schienenfahrzeugs 1 sind dann bevorzugt zwei elektronische Auswerteinrichtungen 10, 12 mit wenigstens einem Mikroprozessor angeordnet, nämlich eine erste Auswerteeinrichtung 10 zur Auswertung der die reibungsbasierte elektro-pneumatische Bremse betreffenden Messgröße sowie eine zweite Auswerteeinrichtung 12 zur Auswertung der die Sandungseinrichtung 2, 4 betreffenden Messgröße. In jeder Auswerteeinrichtung 10, 12 findet dann durch eine jeweils implementierte Auswertungssoftware eine Auswertung der erfassten Messgröße hinsichtlich einer bedarfsweise sofort oder in Zukunft erforderlichen Instandsetzung oder Instandhaltung der betreffenden Komponente statt. Die Auswertungssoftware ist dabei jeweils an die spezifische Auswertung der betreffenden Messgröße angepasst.

Für den Fall, dass von der Auswertungssoftware auf der Basis der jeweiligen Messgröße eine sofort oder in Zukunft stattfindende Instandsetzung oder Instandhaltung der betreffenden Komponente 2, 4 für erforderlich gehalten wird, wird von der Auswerteeinrichtung 10, 12 eine diesbezügliche Meldung 14, 16 erzeugt. Bevorzugt wird daher für jede überwachte Komponente oder für jedes überwachte Subsystem 2, 4 eine eigene Meldung 14, 16 von der betreffenden Auswerteeinrichtung 10, 12 erzeugt, hier dann eine erste Meldung 14 und eine zweite Meldung 16.

Die beiden Meldungen 14, 16 werden dann von den beiden Auswerteeinrichtungen 10, 12 an eine zentrale Einheit 18 auf dem Schienenfahrzeug 1 übermittelt. Je

Schienenfahrzeug 1 ist bevorzugt eine solche zentrale Einheit 18 an Bord vorhanden. Die zentrale Einheit 18 stellt eine elektronische Einrichtung mit wenigstens einem Mikroprozessor dar.

Die zentrale Einheit 18 ist zum Datenaustauch mit anderen Systemen des Schienenfahrzeugs 1 einerseits an einen Fahrzeugdatenbus 20 des Schienenfahrzeugs 1 angeschlossen sowie beispielsweise drahtlos mit einer Einrichtung 26 bevorzugt drahtlos verbunden, welche Umgebungsdaten des Schienenfahrzeugs 1 wie etwa die Umgebungstemperatur und Streckendaten wie beispielsweise eine Steigung, ein Gefälle oder einen Kurvenradius erfasst und/oder speichert und an die zentrale Einheit 18 liefert. Die von den Auswerteeinrichtungen 10, 12 bzw. Auswertungssoftware erzeugten Meldungen 14, 16 können dann in der zentralen Einheit 18 durch solche Daten ergänzt bzw. korrigiert werden.

Anstatt zweier Auswerteeinrichtungen 10, 12 könnte auch für mehrere Komponenten und diesen zugeordneten Messeinrichtungen auch nur eine Auswerteeinrichtung vorgesehen sein, welche dann mehrere Meldungen 14, 16 generiert.

Eine solche Meldung 14, 16 beinhaltet dabei zum einen bevorzugt eine Identifikation und/oder Lokalisierung der betroffenen Komponente 2, 4, hier beispielsweise eine Scheibenbremse an der ersten Achse am zweiten Drehgestell des Schienenfahrzeugs 1. Bei mehreren zu einem Schienenfahrzeugzug zusammen gefassten Schienenfahrzeugen kann die Meldung 14, 16 auch das von einer erforderlichen Instandhaltung oder Instandsetzung betroffene Schienenfahrzeug 1 identifizieren.

Weiterhin beinhaltet eine Meldung 14, 16 bevorzugt auch eine Information über einen noch vorhandenen Abnutzungsvorrat der Bremsscheibe bzw. der Bremsbeläge. Damit kann das Erreichen einer vorgegebenen Verschleißgrenze zeitlich prognostiziert werden. Daher beinhaltet eine Meldung bevorzugt auch eine Prognose über die noch verbleibende Zeit bzw. über die Anzahl der noch zu Verfügung stehenden Gebrauchszyklen, bis eine Instandhaltung oder Instandsetzung der betreffenden Komponente 2, 4 notwendig ist.

Besonders bevorzugt beinhaltet eine Meldung 14, 16 unterschiedliche Dringlichkeitsstufen im Hinblick auf eine erforderliche Instandhaltung oder Instandsetzung der Komponente 2, 4. Eine solche Dringlichkeitsstufe kann beispielsweise ein zeitlich langfristiges, kurzfristiges oder sofortiges Erfordernis einer Instandhaltungs- oder Instandsetzungsmaßnahme der betreffenden Komponente 2, 4 repräsentieren.

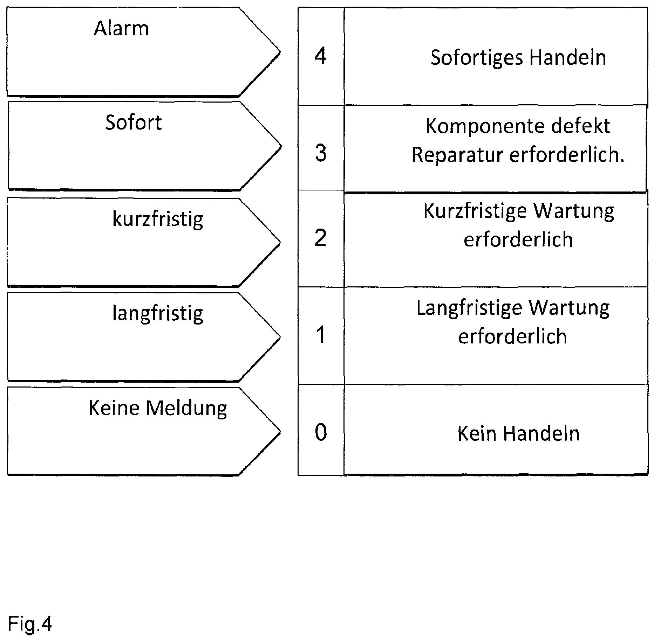

Ein Beispiel von vier möglichen Dringlichkeitsstufen Nr. 0 bis Nr. 4 ist in Fig.4 veranschaulicht. Demzufolge wird keine Meldung erzeugt, wenn die Auswertung der betreffenden Messgröße zum Ergebnis kommt, das keinerlei Handlungsbedarf erforderlich ist (Dringlichkeitsstufe Nr. 0). Eine in der Meldung 14, 16 aufgeführte Dringlichkeitsstufe Nr. 1 kann eine längerfristige Wartung oder Instandsetzung erfordern, während die diesbezügliche Frist für die Dringlichkeitsstufe Nr. 2 kürzer ist. Eine sehr kurzfristige Reparatur oder Instandhaltung einer Komponente 2, 4 kann durch eine Dringlichkeitsstufe Nr. 3 in der Meldung kenntlich gemacht werden. Eine Dringlichkeitsstufe Nr. 4 bedeutet indes die Notwendigkeit eines sofortigen Handelns, einer sofortigen Reparatur oder Instandhaltung auch unter sofortiger Außerbetriebnahme des Schienenfahrzeugs 1.

Die Meldungen 14, 16 werden dann mittels einer in die zentrale Einheit 18 integrierten Sende-/Empfangseinrichtung beispielsweise drahtlos im Rahmen z.B. eines cloud computing an einen Server 22 in einem Kontrollzentrum 28 übermittelt, welcher ebenfalls über eine geeignete Sende-/Empfangseinrichtung verfügt. Dort werden die Meldungen 14, 16 dann an einer Anzeigeeinrichtung 24 bevorzugt in visueller Form ausgegeben. Der Server 22 kann bevorzugt auch die Daten der Einrichtung 26 drahtlos empfangen, welche Messgrößen der Umgebung bzw. Streckendaten erfasst.

Dieser bevorzugt drahtlose Transfer kann entweder erfolgen, sobald eine drahtlose Funkverbindung aufgebaut ist bzw. werden kann bzw. auch per WLAN im Depot. Alternativ kann die Kommunikation auch über eine Wegstreckenverbindung im Gleisbett erfolgen.

Die zentrale Einheit 18 verfügt beispielsweise über GPS, so dass die Meldung 14, 16 auch den momentanen Standort des Schienenfahrzeugs 1 oder des Schienenfahrzeugzugs beinhalten kann.

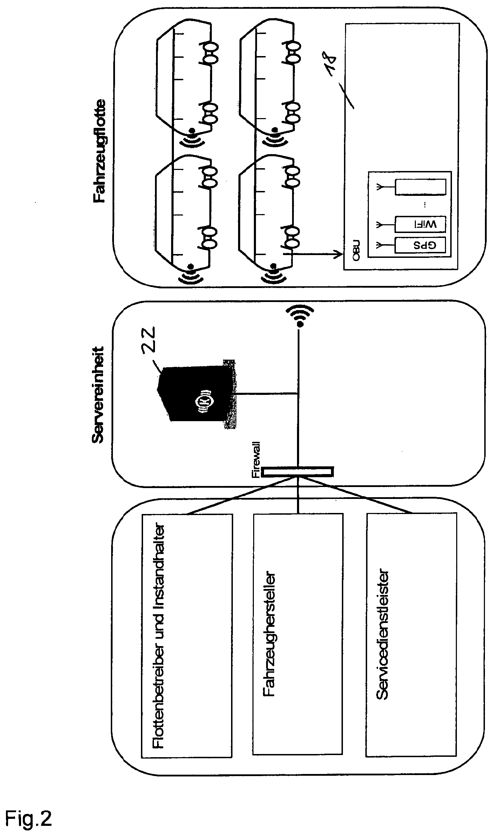

Wie Fig.2 illustriert, können auf die genannte Weise Komponenten und Subsysteme (in Fig.2: SS1 bis SS3) von Schienenfahrzeugen einer ganzen Flotte von aus mehreren Schienenfahrzeugen (in Fig.2: Consist 1, Consist 2) bestehenden Schienenfahrzeugzügen hinsichtlich einer bedarfsweise erforderlichen Instandsetzung oder Instandhaltung diagnostiziert bzw. überwacht werden, wobei dann bevorzugt jedes dieser Schienenfahrzeuge (in Fig.2: Consist 1, Consist 2) über eine oben beschriebene zentrale Einheit 18 (OBM, Onboard Unit) verfügt, welche die Meldungen 14, 16 dann an den Servereinheit 22 in der Kommandozentrale sendet. Vom Server 22 des Kontrollzentrums 28 können die Meldungen 6, 8 dann auch über Internet oder andere Datennetze einem Endnutzer wie dem Flottenbetreiber und Instandhalter, dem Fahrzeughersteller und/oder dem Servicedienstleister zugänglich gemacht werden.

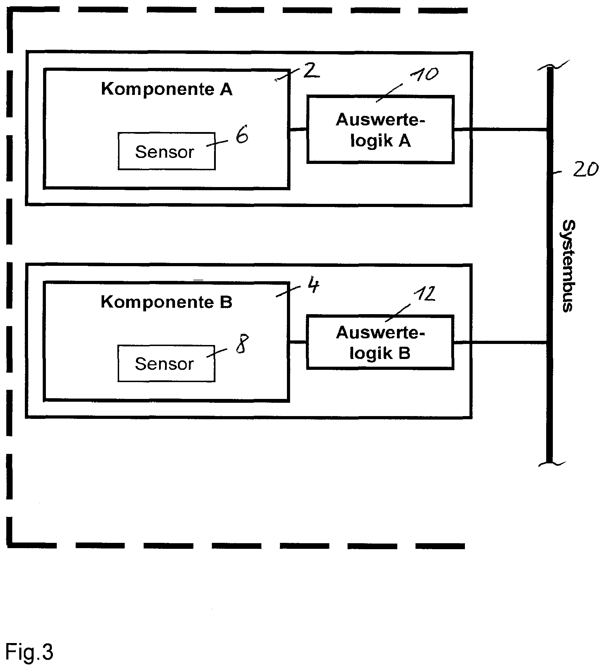

Bei der Ausführungsform von Fig.3 ist, wie bei der Ausführungsform von Fig.1 jeder zu überwachenden Komponente 2, 4 eine eigene Messeinrichtung 6, 8 sowie eine eigene Auswerteeinrichtung 10, 12 samt integrierter Auswertungssoftware zugeordnet, wobei die Auswerteeinrichtungen 10, 12 hier jeweils an den Fahrzeugdatenbus 20 angeschlossen sind, um über den Fahrzeugdatenbus 20 die von ihnen generierten Meldungen 14, 16 an die zentrale Einheit 18 des Schienenfahrzeugs 1 zu senden. Alternativ könnte auch nur eine Auswerteeinrichtung für mehrere Komponenten oder Subsysteme vorgesehen sein, wobei dann die Auswertungssoftware ausgebildet ist, dass sie die Messgrößen mehrerer Messeinrichtungen verarbeiten und mehrere Meldungen erzeugen kann.

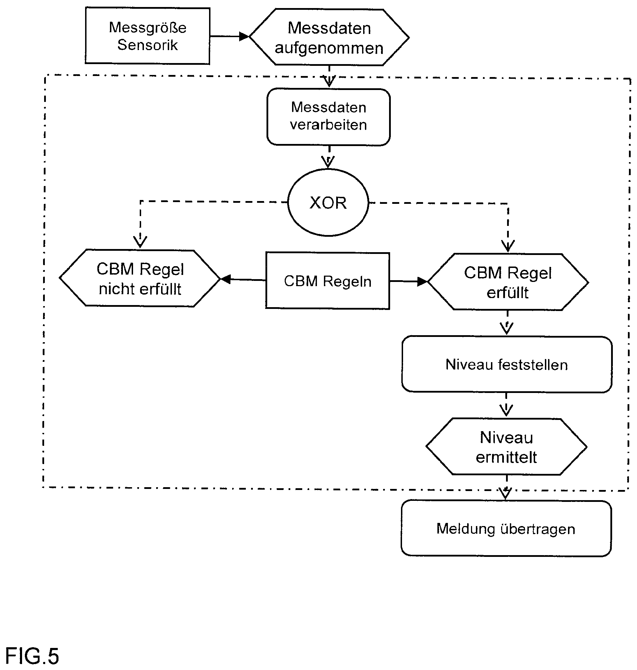

In Fig.5 ist ein Ablaufplan einer bevorzugten Ausführungsform eines Verfahrens zur Überwachung und Diagnose von Komponenten eines Schienenfahrzeugs gemäß einer bevorzugten Ausführungsform dargestellt. Demzufolge wird ein einem ersten Schritt eine für eine Prognose einer bedarfsweise erforderlichen Instandsetzung oder Instandhaltung der Komponente relevante Messgröße mittels einer Sensorik oder Messeinrichtung aufgenommen und in der Auswertungssoftware verarbeitet bzw. ausgewertet. Falls die erfassten und verarbeiteten Messgrößen die CBM-Regeln nicht erfüllen, werden diese so angepasst, dass sie die CBM-Regeln erfüllen. Dann werden die erfassten und verarbeiteten und gegebenenfalls an die CBM-Regeln angepassten Messgrößen hinsichtlich ihrer Dringlichkeitsstufe (Niveau) kategorisiert und, wobei die Auswertungssoftware entsprechend ausgebildet ist. Das in Fig.5 strichpunktiert angedeutete Kästchen markiert den Umfang der Auswertungssoftware oder CBM-Logik wie sie in die betreffende Auswerteeinrichtung integriert ist.

Anschließend wird von der Auswertungssoftware oder CBM-Logik die Meldung erzeugt und an die zentrale Einheit 18 zur Weiterleitung an das Kontrollzentrum 28 übertragen.

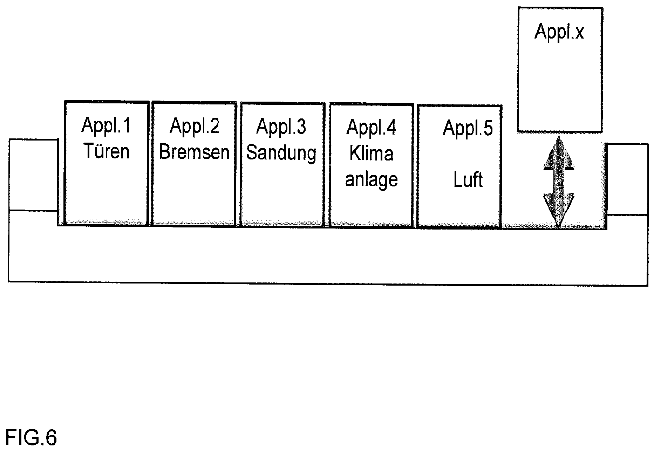

In Fig.6 ist die in einer Auswerteinrichtung oder in mehreren Auswertungseinrichtungen implementierte Auswertungssoftware oder CBM-Logik symbolisch als ein nach oben offener Kasten dargestellt, in welchem einzelne Softwaremodule Appl.1 bis Appl.5 aufgenommen sind. Ein solches Softwaremodul ist bevorzugt je einer, im Hinblick auf eine erforderliche Instandsetzung oder Instandhaltung zu überwachende oder diagnostizierende Komponente zugeordnet. Im vorliegenden Fall ist beispielsweise das Softwaremodul Appl.1 den Türen, das Softwaremodul Appl.2 den Bremsen, das Softwaremodul Appl.3 der Sandungseinrichtung und das Softwaremodul Appl.1 der Luftversorgung zugeordnet.

Der Aufbau der Auswertungssoftware oder CBM-Logik ist daher bevorzugt modular, wobei die Auswertungssoftware ausgebildet ist, dass sie um einzelne Softwaremodule ergänzt werden kann. Dieser Umstand ist in Fig.6 dadurch veranschaulicht, dass ein Softwaremodul Appl.x in einer Leerstelle im Kasten eingefügt wird. Bevorzugt können auch einzelne Softwaremodule gelöscht oder ausgetauscht werden. Eine solche Ergänzung, Erweiterung, Veränderung oder Anpassung der Auswertungssoftware oder CBM-Logik erfolgt mittels vom Kontrollzentrum 28 direkt oder über die zentrale Einheit 18 an die Auswerteeinrichtung(en) 10, 12 gesandter Instruktionen, Daten und/oder Softwaremodule.

### Bezugszeichenliste

- 1: Schienenfahrzeug
- 2: erste Komponente
- 4: zweite Komponente
- 6: erste Messeinrichtung
- 8: zweite Messeinrichtung
- 10: erste Auswerteeinrichtung
- 12: zweite Auswerteeinrichtung
- 14: erste Meldung
- 16: zweite Meldung
- 18: zentrale Einheit
- 20: Datenbus
- 22: Server
- 24: Anzeigeeinrichtung
- 26: Einrichtung
- 28: Kontrollzentrum

## Patentansprüche

1. Verfahren zur Überwachung und Diagnose von Komponenten (2, 4) eines Schienenfahrzeugs (1) als singuläres Schienenfahrzeug oder als Bestandteil eines aus mehreren Schienenfahrzeugen (1) bestehenden Schienenfahrzeugzuges hinsichtlich einer bedarfsweise erforderlichen Instandsetzung oder Instandhaltung wenigstens einer Komponente (2, 4), bei dem
a) wenigstens eine Messeinrichtung (6, 8) wenigstens eine Messgröße erfasst, welche für eine Beurteilung einer bedarfsweise erforderlichen Instandsetzung oder Instandhaltung der Komponente (2, 4) relevant ist, und bei dem
b) durch in eine an Bord des Schienenfahrzeugs (1) oder des Schienenfahrzeugzuges angeordnete Auswerteinrichtung (10, 12) implementierte Auswertungssoftware eine Auswertung der erfassten Messgröße hinsichtlich einer bedarfsweise sofort oder in Zukunft erforderlichen Instandsetzung oder Instandhaltung der betreffenden Komponente (2, 4) erfolgt, und bei dem
c) für den Fall, dass von der Auswerteeinrichtung (10, 12) eine sofort oder in Zukunft stattfindende Instandsetzung oder Instandhaltung der betreffenden Komponente (2, 4) für erforderlich gehalten wird, von der Auswerteeinrichtung (10, 12) eine diesbezügliche Meldung (14, 16) erzeugt und an ein Kontrollzentrum (28) übermittelt wird, welches sich außerhalb des Schienenfahrzeugs (1) oder des Schienenfahrzeugzugs befindet, **dadurch gekennzeichnet, dass**
c') auf dem Schienenfahrzeug (1) oder auf dem Schienenfahrzeugzug eine bordseitige zentrale Einheit (18) vorgesehen wird, welche mit den Auswerteeinrichtungen (10, 12) mehrerer Komponenten (2, 4) des Schienenfahrzeugs (1) kommuniziert und die Meldung(en) (14, 16) an das Kontrollzentrum (28) liefert, wobei
d) die Auswertungssoftware modular aufgebaut ist, wobei einzelne Softwaremodule bedarfsweise ergänzt, gelöscht oder ausgetauscht werden, und wobei
e) ein solches Softwaremodul je einer, im Hinblick auf eine erforderliche Instandsetzung oder Instandhaltung zu überwachenden oder diagnostizierenden Komponente (2, 4) zugeordnet ist, und wobei
f) eine Ergänzung, Erweiterung, Veränderung oder Anpassung der in der Auswerteinrichtung (10, 12) implementierten Auswertungssoftware mittels vom Kontrollzentrum (28) an die Auswerteeinrichtung (10, 12) gesandter Softwaremodule, während des bestimmungsgemäßen Einsatzes oder Fahrbetriebs des Schienenfahrzeugs oder Schienenfahrzeugzuges, erfolgt.

2. Verfahren nach einem der vorhergehenden Ansprüche, **dadurch gekennzeichnet, dass** die Ergänzung, Veränderung oder Anpassung der in der Auswerteinrichtung (10, 12) implementierten Auswertungssoftware durch drahtlose Kommunikation mit dem Kontrollzentrum (28) erfolgt.

3. Verfahren nach einem der vorhergehenden Ansprüche, **dadurch gekennzeichnet, dass** die Meldung (14, 16) eine Information über einen noch vorhandenen Abnutzungsvorrat wenigstens einer von Verschleiß betroffenen Komponente (2, 4) des Schienenfahrzeugs (1) oder des Schienenfahrzeugzugs beinhaltet.

4. Verfahren nach einem der vorhergehenden Ansprüche, **dadurch gekennzeichnet, dass** die Meldung (14, 16) eine Prognose über die noch verbleibende Zeit beinhaltet, bis eine Instandhaltung oder Instandsetzung der Kompo-nente (2, 4) notwendig ist.

5. Verfahren nach einem der vorhergehenden Ansprüche, **dadurch gekennzeichnet, dass** die Meldung (14, 16) eine Information über die Ursache einer (eines) eventuell aufgetretenen Störung oder Fehlers der Komponente (2, 4) beinhaltet.

6. Verfahren nach einem der vorhergehenden Ansprüche, **dadurch gekennzeichnet, dass** die Ergänzung, Veränderung oder Anpassung der in der Auswerteinrichtung (10, 12) implementierten Auswertungssoftware mittels vom Kontrollzentrum (28) an die Auswerteeinrichtung (10, 12) gesandter Softwaremodule auch solche Softwaremodule beinhaltet, welche die bestimmungsgemäße Funktion der Komponente (2, 4) betreffen.

7. Verfahren nach Anspruch 6, **dadurch gekennzeichnet, dass** die Meldung (14, 16) von der Auswerteeinrichtung (10, 12) oder von der zentralen Einheit (28) zum Kontrollzentrum (28) drahtlos übermittelt wird.

8. Verfahren nach einem der vorhergehenden Ansprüche, **dadurch gekennzeichnet, dass** die Meldung (14, 16) in dem Kontrollzentrum (28) in visueller Form ausgegeben wird.

9. Verfahren nach einem der vorhergehenden Ansprüche, **dadurch gekennzeichnet, dass** die Meldung (14, 16) unterschiedliche Dringlichkeitsstufen im Hinblick auf eine erforderliche Instandhaltung oder Instandsetzung der Komponente (2, 49 beinhaltet.

10. Verfahren nach einem der vorhergehenden Ansprüche, **dadurch gekennzeichnet, dass** die Meldung (14, 16) den momentanen Standort des Schienenfahrzeugs (1) oder des Schienenfahrzeugzuges beinhaltet.

11. Verfahren nach einem der vorhergehenden Ansprüche, **dadurch gekennzeichnet, dass** bei mehreren zu einem Schienenfahrzeugzug zusammen gefassten Schienenfahrzeugen die Meldung (14, 16 das von einer erforderlichen Instandhaltung oder Instandsetzung betroffene Schienenfahrzeug (1) identifiziert.

12. Verfahren nach einem der vorhergehenden Ansprüche, **dadurch gekennzeichnet, dass** weitere Messgrößen von der Auswerteeinrichtung (10, 12) ausgewertet werden, welche nicht in Zusammenhang mit der Komponente (2, 4) stehen.

13. Verfahren nach Anspruch 12, **dadurch gekennzeichnet, dass** die weiteren Messgrößen die Umgebung oder befahrene Strecke des Schienenfahrzeugs (1) oder des Schienenfahrzeugzugs betreffen.

14. Verfahren nach einem der vorhergehenden Ansprüche, **dadurch gekennzeichnet, dass** die Auswerteeinrichtung (10, 12) an einen Datenbus (20) des Schienenfahrzeugs (1) oder des Schienenfahrzeugzuges zur Weiterleitung der Meldung (14, 16) angeschlossen sind.

15. Verfahren nach einem der vorhergehenden Ansprüche, **dadurch gekennzeichnet, dass** die Komponente (2, 4) wenigstens eine der folgenden Komponenten ist: Drehgestellausrüstung, Klimaanlage, Luftversorgungssystem, Stromversorgungssystem, Sandungssystem, Türöffnungs- und Schließsystem, Scheibenwischervorrichtung, Reibungsbasiertes Bremssystem, generatorisches Bremssystem, Magnetschienenbremse, Toiletten, Bremsensteuerung.

16. System zur Überwachung und Diagnose von Komponenten (2, 4) eines Schienenfahrzeugs (1) als singuläres Schienenfahrzeug oder als Bestandteil eines aus mehreren Schienenfahrzeugen (1) bestehenden Schienenfahrzeugzuges hinsichtlich einer bedarfsweise erforderlichen Instandsetzung oder Instandhaltung wenigstens einer Komponente (2, 4) mit wenigstens einer Messeinrichtung (6, 8) und einer Auswerteeinrichtung (10, 12), wobei das System derart ausgestaltet ist, dass es das Verfahren gemäß einem der Ansprüche 1 bis 16 ausführen kann.

## Claims

1. A method for monitoring and diagnosing components (2, 4) of a rail vehicle (1) in the form either of a single rail vehicle or of a train consisting of a plurality of rail vehicles (1), in respect of any required repair to or maintenance of at least one component (2, 4), in which
a) at least one measuring device (6, 8) records at least one measurand that is relevant for assessing any required repair to or maintenance of the component (2, 4), and in which
b) an evaluation of the recorded measurand in respect of any repair to or maintenance of the component (2, 4) in question required immediately or in the future is carried out by evaluation software installed in an evaluation device (10, 12) positioned on board the rail vehicle (1) or train, and in which,
c) in the event that the immediate or future repair to or maintenance of the component (2, 4) in question is deemed necessary by the evaluation device (10, 12), a corresponding report (14, 16) is generated by the evaluation device (10, 12) and transmitted to a control centre (28), which is located outside the rail vehicle (1) or train, **characterised in that**
c') provided on the rail vehicle (1) or train is an on-board central unit (18), which communicates with the evaluation devices (10, 12) of a plurality of components (2, 4) of the rail vehicle (1) and delivers the report(s) (14, 16) to the control centre (28),
d) the evaluation software being of modular construction, individual software modules being supplemented, deleted or replaced as required, and
e) such a software module being assigned to each component (2, 4) to be monitored or diagnosed in respect of any required repair or maintenance, and
f) the supplementing, extension, modification or adaptation of the evaluation software installed in the evaluation device (10, 12) being carried out by software modules sent from the control centre (28) to the evaluation device (10, 12) during the proper use or operation of the rail vehicle or train.

2. A method according to any one of the preceding claims, **characterised in that** the supplementing, modification or adaptation of the evaluation software installed in the evaluation device (10, 12) is carried out by wireless communication with the control centre (28).

3. A method according to any one of the preceding claims, **characterised in that** the report (14, 16) contains information on the remaining wear margin of at least one wear-affected component (2, 4) of the rail vehicle (1) or train.

4. A method according to any one of the preceding claims, **characterised in that** the report (14, 16) contains a prognosis of the time remaining until the maintenance or repair of the component (2, 4) is necessary.

5. A method according to any one of the preceding claims, **characterised in that** the report (14, 16) contains information on the cause of any malfunction or fault of the component (2, 4) that may have occurred.

6. A method according to any one of the preceding claims, **characterised in that** the supplementing, modification or adaptation of the evaluation software installed in the evaluation device (10, 12) by means if software modules sent from the control centre (28) to the evaluation device (10, 12) also contains software modules relating to the proper operation of the component (2, 4).

7. A method according to claim 6, **characterised in that** the report (14, 16) is transmitted wirelessly from the evaluation device (10, 12) or the central unit (28) to the control centre (28).

8. A method according to any one of the preceding claims, **characterised in that** the report (14, 16) is output in visual form in the control centre (28).

9. A method according to any one of the preceding claims, **characterised in that** the report (14, 16) contains various priority levels in respect of any necessary repair to or maintenance of the component (2, 49).

10. A method according to any one of the preceding claims, **characterised in that** the report (14, 16) contains the current location of the rail vehicle (1) or train.

11. A method according to any one of the preceding claims, **characterised in that** in the case of a plurality of rail vehicles that have been combined to form a train the report (14, 16) identifies the rail vehicle (1) affected by the necessary maintenance or repair.

12. A method according to any one of the preceding claims, **characterised in that** further measurands not related to the component (2, 4) are also evaluated by the evaluation device (10, 12).

13. A method according to claim 12, **characterised in that** these further measurands relate to the environment of the rail vehicle (1) or train or the section of track on which it is running.

14. A method according to any one of the preceding claims, **characterised in that** the evaluation device (10, 12) is connected to a data bus (20) of the rail vehicle (1) or train in order to forward the report (14, 16).

15. A method according to any one of the preceding claims, **characterised in that** the component (2, 4) is at least one of the following components: a bogie set, an air-conditioning unit, an air supply system, a power supply system, a sanding system, a door opening and closing system, a windscreen wiper device, a friction-based braking system, a dynamic braking system, electromagnetic rail brakes, toilets, a brake control system.

16. A system for monitoring and diagnosing components (2, 4) of a rail vehicle (1) in the form either of a single rail vehicle or of a train consisting of a plurality of rail vehicles (1) in respect of any required repair to or maintenance of at least one component (2, 4), having at least one measuring device (6, 8) and one evaluation device (10, 12), the system being configured such that it is able to carry out the method according to any one of claims 1 to 16.

## Revendications

1. Procédé de contrôle et de diagnostic de composants (2, 4) d'un véhicule (1) ferroviaire en tant que véhicule ferroviaire unique ou en tant que constituant d'un train de véhicules ferroviaires constitué de plusieurs véhicules (1) ferroviaires en ce qui concerne la nécessité suivant les besoins d'une mise en condition ou d'un maintien en condition d'au moins l'un des composants (2, 4), dans lequel
a) au moins un dispositif (6, 8) de mesure relève au moins une grandeur de mesure, qui est pertinente pour une décision d'une nécessité suivant les besoins de mise en condition ou de maintien en condition des composants (2, 4), et dans lequel
b) par un logiciel d'exploitation mis en œuvre dans un dispositif (10, 12) d'exploitation à bord du véhicule (1) ferroviaire ou du train de véhicules ferroviaires, il est produit une exploitation des grandeurs de mesure relevées en ce qui concerne la nécessité suivant les besoins immédiate ou dans l'avenir d'une mise en condition ou d'un maintien en condition des composants (2, 4) concernés et dans lequel
c) dans le cas où une mise en condition ou un maintien en condition, ayant lieu immédiatement ou dans l'avenir des composants (2, 4) concernés, est tenue pour nécessaire par le dispositif (10, 12) d'exploitation, un message (14, 16) correspondant est produit par le dispositif (10, 12) d'exploitation et transmis à un centre (28) de contrôle, qui se trouve à l'extérieur du véhicule (1) ferroviaire ou du train de véhicules ferroviaires, **caractérisé en ce que** c') l'on prévoit sur le véhicule (1) ferroviaire ou sur le train de véhicules ferroviaires une unité (18) centrale à bord, qui communique avec les dispositifs (10, 12) d'exploitation de plusieurs composants (2, 4) du véhicule (1) ferroviaire et qui fournit le ou les messages (14, 16) au centre (28) de contrôle, dans lequel
d) le logiciel d'exploitation est constitué de manière modulaire, des modules de logiciel individuels étant, suivant les besoins, complétés, effacés ou remplacés, et dans lequel
e) un module de logiciel de ce genre est associé, respectivement, à un composant (2, 4) à contrôler ou à diagnostiquer en ce qui concerne la nécessité d'une mise en condition ou d'un maintien en condition, et dans lequel
f) un complément, une extension, une modification ou une adaptation des logiciels d'exploitation mis en œuvre dans le dispositif (10, 12) d'exploitation est effectuée au moyen de modules de logiciel envoyés par le centre (28) de contrôle au dispositif (10, 12) d'exploitation, pendant l'utilisation conforme à la détermination ou au fonctionnement en circulation.

2. Procédé suivant l'une des revendications précédentes, **caractérisé en ce que** le complément, la modification ou l'adaptation des logiciels d'exploitation mis en œuvre dans le dispositif (10, 12) d'exploitation s'effectue par communication sans fil avec le centre (28) de contrôle.

3. Procédé suivant l'une des revendications précédentes, **caractérisé en ce que** le message (14, 16) contient une information sur une réserve d'usure encore présente d'au moins un composant (2, 4) concerné par l'usure du véhicule (1) ferroviaire ou du train de véhicules ferroviaires.

4. Procédé suivant l'une des revendications précédentes, **caractérisé en ce que** le message (14, 16) contient un pronostic sur le temps qu'il reste encore jusqu'à ce qu'une mise en condition ou un maintien en condition des composants (2, 4) soit nécessaire.

5. Procédé suivant l'une des revendications précédentes, **caractérisé en ce que** le message (14, 16) contient une information sur l'origine d'une perturbation ou d'un défaut apparu éventuellement des composants (2, 4).

6. Procédé suivant l'une des revendications précédentes, **caractérisé en ce que** le complément, la modification ou l'adaptation des logiciels d'exploitation mis en œuvre dans le dispositif (10, 12) d'exploitation, au moyen de modules de logiciel envoyés du centre (28) de contrôle au dispositif (10, 12) d'exploitation, comporte aussi des modules de logiciel qui concernent le fonctionnement conforme aux prescriptions des composants (2, 4).

7. Procédé suivant la revendication 6, **caractérisé en ce que** le message (14, 16) est transmis sans fil du dispositif (10, 12) d'exploitation ou de l'unité (28) centrale au centre (28) de contrôle.

8. Procédé suivant l'une des revendications précédentes, **caractérisé en ce que** le message (14, 16) est émis sous forme visuelle dans le centre (28) de contrôle.

9. Procédé suivant l'une des revendications précédentes, **caractérisé en ce que** le message (14, 16) contient des stades d'urgence différents en ce qui concerne la nécessité d'une mise en condition ou d'un maintien en condition des composants (2, 49).

10. Procédé suivant l'une des revendications précédentes, **caractérisé en ce que** le message (14, 16) contient l'emplacement instantané du véhicule (1) ferroviaire ou du train de véhicules ferroviaires.

11. Procédé suivant l'une des revendications précédentes, **caractérisé en ce que**, pour plusieurs véhicules ferroviaires réunis en un train de véhicules ferroviaires, le message (14, 16) identifie le véhicule (1) ferroviaire concerné par la nécessité d'un maintien en condition ou d'une mise en condition.

12. Procédé suivant l'une des revendications précédentes, **caractérisé en ce que** d'autres grandeurs de mesure, qui ne sont pas en relation avec les composants (2, 4), sont exploitées par le dispositif (10, 12) d'exploitation.

13. Procédé suivant la revendication 12, **caractérisé en ce que** les autres grandeurs de mesure concernent l'environnement ou des voies parcourues par le véhicule (1) ferroviaire ou le train de véhicules ferroviaires.

14. Procédé suivant l'une des revendications précédentes, **caractérisé en ce que** le dispositif (10, 12) d'exploitation est raccordé à un bus (20) de données du véhicule (1) ferroviaire ou du train de véhicules ferroviaires pour l'acheminement du message (14, 16).

15. Procédé suivant l'une des revendications précédentes, **caractérisé en ce que** les composants (2, 4) sont au moins l'un des composants suivants : équipement de boggie, installation de conditionnement d'air, système d'alimentation en air, système d'alimentation en courant, système de sablage, système d'ouverture et de fermeture de porte, dispositif d'essuie-glace, système de frein reposant sur la friction, système de frein à générateur, frein par rail magnétique, toilettes, commande de frein.

16. Système de contrôle et de diagnostic de composants (2, 4) d'un véhicule (1) ferroviaire, comme véhicule ferroviaire unique ou comme partie constitutive d'un train de véhicules ferroviaires constitué de plusieurs véhicules (1) ferroviaires en ce qui concerne la nécessité, en cas de besoin, d'une mise en condition ou d'un maintien en condition d'au moins l'un des composants (2, 4), comprenant au moins un dispositif (6, 8) de mesure et un dispositif (10, 12) d'exploitation, le système étant conformé de manière à pouvoir effectuer un procédé suivant l'une des revendications 1 à 15.
